# EUROPEAN PATENT APPLICATION

(11) **EP 4 586 100 A1**
(43) Date of publication of application: **16.07.2025**
(21) Application number: 24777542.2
(22) Date of filing: 07.02.2024
(51) Int. Cl.: G06F 13/28

(54) **DATA PROCESSING METHOD AND SYSTEM, CHIP, AND TERMINAL**

(30) Priority: 30.03.2023 CN 202310361448
(71) Applicant: Tencent Technology (Shenzhen) Company Limited, Shenzhen, Guangdong 518057 (CN)
(72) Inventor: REN, Zimu, Shenzhen, Guangdong 518057 (CN)
(74) Representative: Gunzelmann, Rainer
(86) International application number: PCT/CN2024/076589
(87) International publication number: WO 2024/198748

(57) **Abstract**

A data processing method, executed by a data processing system. The data processing system comprises a direct memory access unit, a vector processing unit, a scalar processing unit, and a hardware synchronization lock management unit. The method comprises: the scalar processing unit sends a first task instruction to the direct memory access unit, and sends a second task instruction to the vector processing unit (201); on the basis of the first task instruction sent by the scalar processing unit, the direct memory access unit determines a first distributed synchronization lock indicated by a first synchronization lock identifier comprised in the first task instruction (202); when the working state value of the first distributed synchronization lock is a preset value representing an idle state, and the task type value of the first distributed synchronization lock meets an execution condition for a first data processing task, the direct memory access unit executes the first data processing task comprised in the first task instruction, and sends a task completion instruction to the hardware synchronization lock management unit after the first data processing task is completed (203); on the basis of the task completion instruction, the hardware synchronization lock management unit updates the task type value of a first hardware synchronization lock indicated by the first synchronization lock identifier in a hardware synchronization lock sequence (204); and, when the task type value of the first hardware synchronization lock is updated, the vector processing unit executes a second data processing task comprised in the second task instruction sent by the scalar processing unit (205).

## Description

### RELATED APPLICATION

This application claims priority to Chinese Patent Application No. 2023103614485, filed on March 30, 2023 and entitled "DATA PROCESSING METHOD AND SYSTEM, CHIP, AND TERMINAL", which is incorporated herein by reference in its entirety.

### FIELD OF THE TECHNOLOGY

Embodiments of the present disclosure relate to the field of computer technologies, and in particular, to a data processing method and system, a chip, and a terminal.

### BACKGROUND OF THE DISCLOSURE

With the development of computer technologies, processors are required to process increasing amounts of data. During data processing of a processor, generally, a direct memory access (DMA) unit of the processor moves data stored in an external memory of the processor to an internal memory unit of the processor. Then, a vector processing unit (VPU) of the processor processes the data stored in the internal memory unit. Therefore, how to control a timing relationship between the direct memory access unit moving data and the vector processing unit processing data is the key to improving the processing efficiency of the processor.

In the related art, generally, a scalar processing unit (SPU) in the processor that is configured for scalar calculation and program flow control determines, according to a software program written by a developer, a time point at which the direct memory access unit moves data and a time point at which the vector processing unit processes data. The scalar processing unit sends tasks to the direct memory access unit and the vector processing unit at the corresponding time point, so that the timing relationship between the direct memory access unit and the vector processing unit is controlled by using software.

However, in the related art, the scalar processing unit needs to wait for the direct memory access unit to complete execution of the task before sending the task to the vector processing unit. During waiting, the scalar processing unit can only be in a null state, and cannot process other tasks. Therefore, the utilization of the scalar processing unit is low, resulting in low data processing efficiency of the processor.

### SUMMARY

Embodiments of the present disclosure provide a data processing method and system, a chip, and a terminal, which can improve the data processing efficiency of a processor. The technical solutions are as follows:
According to one aspect, a data processing method is provided. The method is performed by a data processing system, the data processing system including a direct memory access unit, a vector processing unit, a scalar processing unit, and a hardware synchronization lock management unit. The method includes:
transmitting, by the scalar processing unit, a first task instruction to the direct memory access unit, and transmitting a second task instruction to the vector processing unit;
determining, by the direct memory access unit, in the direct memory access unit based on the first task instruction transmitted by the scalar processing unit, a first distributed synchronization lock indicated by a first synchronization lock identifier included in the first task instruction, the first distributed synchronization lock being configured for determining whether to execute a first data processing task included in the first task instruction;
executing, by the direct memory access unit in a case that an operation status value of the first distributed synchronization lock is a preset value representing an idle state, and a task type value of the first distributed synchronization lock satisfies an execution condition of the first data processing task, the first data processing task included in the first task instruction, and transmitting a task completion instruction to the hardware synchronization lock management unit;
updating, by the hardware synchronization lock management unit based on the task completion instruction, a task type value of a first hardware synchronization lock indicated by the first synchronization lock identifier in a hardware synchronization lock sequence; and
executing, by the vector processing unit in a case that the task type value of the first hardware synchronization lock is updated, a second data processing task included in the second task instruction transmitted by the scalar processing unit.

According to another aspect, a data processing system is provided. The data processing system includes a direct memory access unit, a vector processing unit, a scalar processing unit, and a hardware synchronization lock management unit,
the scalar processing unit being configured to transmit a first task instruction to the direct memory access unit, and transmit a second task instruction to the vector processing unit;
the direct memory access unit being configured to determine, in the direct memory access unit based on the first task instruction transmitted by the scalar processing unit, a first distributed synchronization lock indicated by a first synchronization lock identifier included in the first task instruction, the first distributed synchronization lock being configured for determining whether to execute a first data processing task included in the first task instruction;
the direct memory access unit being further configured to: execute, in a case that an operation status value of the first distributed synchronization lock is a preset value representing an idle state, and a task type value of the first distributed synchronization lock satisfies an execution condition of the first data processing task, the first data processing task included in the first task instruction, and transmit a task completion instruction to the hardware synchronization lock management unit;
the hardware synchronization lock management unit being configured to update, based on the task completion instruction, a task type value of a first hardware synchronization lock indicated by the first synchronization lock identifier in a hardware synchronization lock sequence; and
the vector processing unit being configured to execute, in a case that the task type value of the first hardware synchronization lock is updated, a second data processing task included in the second task instruction transmitted by the scalar processing unit.

According to another aspect, a chip is provided. The chip includes the data processing system according to the foregoing aspect.

According to another aspect, a terminal is provided. The terminal includes a processor and a memory, the memory having a data processing method stored therein, and the processor being configured to implement the data processing method according to the foregoing aspect by using a data processing system.

Details of one or more embodiments of the present disclosure are provided in the accompanying drawings and descriptions below. Other features and advantages of the present disclosure become obvious with reference to the specification, the accompanying drawings, and the claims.

### BRIEF DESCRIPTION OF THE DRAWINGS

To describe the technical solutions in the embodiments of the present disclosure or the conventional technology more clearly, the following briefly describes the accompanying drawings required for describing the embodiments or the conventional technology. Apparently, the accompanying drawings in the following description show merely the embodiments of the present disclosure, and a person of ordinary skill in the art may derive other drawings from these accompanying drawings without creative efforts.
FIG. 1 is a schematic structural diagram of a data processing system according to an embodiment of the present disclosure.
FIG. 2 is a flowchart of a data processing method according to an embodiment of the present disclosure.
FIG. 3 is an interaction flowchart of a data processing method according to an embodiment of the present disclosure.
FIG. 4 is a schematic diagram of determining logic according to an embodiment of the present disclosure.
FIG. 5 is a flowchart of data processing according to an embodiment of the present disclosure.
FIG. 6 is a schematic diagram of a distributed synchronization lock according to an embodiment of the present disclosure.
FIG. 7 is a schematic diagram of a first hardware synchronization lock according to an embodiment of the present disclosure.
FIG. 8 is a flowchart of another type of data processing according to an embodiment of the present disclosure.
FIG. 9 is a schematic structural diagram of a terminal according to an embodiment of the present disclosure.

### DESCRIPTION OF EMBODIMENTS

The technical solutions in the embodiments of the present disclosure are clearly and completely described below with reference to accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

The terms "first", "second", and the like in the present disclosure are configured for distinguishing between same items or similar items whose effects and functions are basically the same. The "first", "second", and "n^{th}" do not have a dependency relationship in logic or time sequence, and a number and an execution order thereof are not limited.

In the present disclosure, the term "at least one" means one or more, and "a plurality of" means two or more.

The information (including, but is not limited to, user equipment information, user personal information, and the like), data (including, but is not limited to, data for analysis, stored data, displayed data, and the like), and signals involved in the present disclosure all are authorized by a user or fully authorized by each party, and the collection, use, and processing of relevant data need to comply with relevant laws, regulations, and standards of relevant countries and regions. For example, a first task instruction and a second task instruction involved in the present disclosure are obtained with full authorization.

For ease of understanding, terms involved in the present disclosure are explained below.

Artificial intelligence (AI) is a theory, method, technology, and application system that uses a digital computer or a machine controlled by a digital computer to simulate, extend, and expand human intelligence, perceive an environment, obtain knowledge, and use knowledge to obtain an optimal result. In other words, the AI is a comprehensive technology in computer science. This technology attempts to understand the essence of intelligence and produce a new intelligent machine that can react in a manner similar to human intelligence. The AI is to study design principles and implementation methods of various intelligent machines, to enable a machine to have functions of perception, reasoning, and decision-making.

The AI technology is a comprehensive discipline, relating to a wide range of fields, and involving both a hardware-level technology and a software-level technology. Basic AI technologies generally include technologies such as a sensor, a dedicated AI chip, cloud computing, distributed storage, a big data processing technology, an operating/interaction system, and electromechanical integration. AI software technologies mainly include fields such as a computer vision technology, a speech processing technology, a natural language processing technology, machine learning/deep learning, automatic driving, and intelligent transportation.

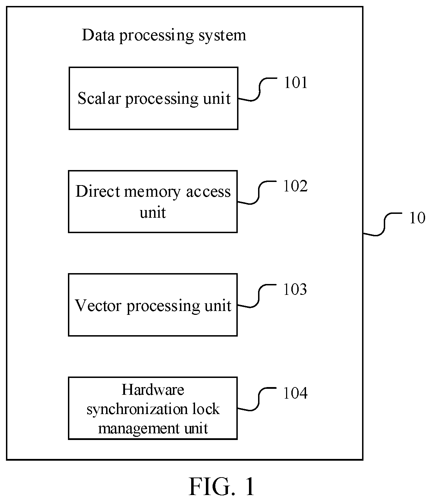

FIG. 1 is a schematic structural diagram of a data processing system according to an embodiment of the present disclosure. Referring to FIG. 1, the data processing system 10 includes a scalar processing unit 101, a direct memory access unit 102, a vector processing unit 103, and a hardware synchronization lock management unit 104.

In some embodiments, the data processing system 10 may be configured in any type of processor, such as an artificial intelligence (AI) processor, a central processing unit (CPU), a graphics processing Unit (GPU), and a digital signal processor (DSP). The data processing system 10 may alternatively be configured in an artificial intelligence (AI) chip, a system on chip (SOC), a printed circuit board (PCB) carrying a chip, or a terminal. The terminal may be a plurality of types of devices such as a smartphone, a tablet computer, a notebook computer, a desktop computer, a smart speaker, a smartwatch, a smart voice interaction device, a smart household appliance, and an in-vehicle terminal. This is not limited in this embodiment of the present disclosure.

The scalar processing unit 101 is configured to transmit a first task instruction to the direct memory access unit 102, and transmit a second task instruction to the vector processing unit 103. The first task instruction and the second task instruction include the same synchronization lock identifier. Correspondingly, the direct memory access unit 102 and the vector processing unit 103 determine, based on the received task instruction, a task to be executed and a time to execute the task.

For example, the direct memory access unit 102 determines a first distributed synchronization lock in the direct memory access unit 102 according to a first synchronization lock identifier in the first task instruction transmitted by the scalar processing unit 101. Further, the direct memory access unit 102 determines, according to an operation status value of the first distributed synchronization lock and a task type value of the first distributed synchronization lock, whether to currently execute a first data processing task in the first task instruction.

The direct memory access unit 102 can further transmit a task completion instruction to the hardware synchronization lock management unit 104 after the task is completed. Correspondingly, after receiving the task completion instruction, the hardware synchronization lock management unit 104 updates a task type value of a first hardware synchronization lock in a hardware synchronization lock sequence. The vector processing unit 103 can execute a second data processing task in the second task instruction in a case that the task type value of the first hardware synchronization lock is updated.

A person skilled in the art may learn that there may be more or fewer terminals. For example, there may be only one terminal, or there may be dozens of or hundreds of terminals or more. A number and a device type of the terminal are not limited in this embodiment of the present disclosure.

In some embodiments, a data processing method is provided. The method is performed by a data processing system. The data processing system includes a direct memory access unit, a vector processing unit, a scalar processing unit, and a hardware synchronization lock management unit. The method includes: The scalar processing unit transmits a first task instruction to the direct memory access unit, and transmits a second task instruction to the vector processing unit, the first task instruction including a first data processing task and a first synchronization lock identifier indicating a first distributed synchronization lock, and the second task instruction including a second data processing task; the direct memory access unit identifies an operation status value of the first distributed synchronization lock from the first task instruction based on the first synchronization lock identifier; the direct memory access unit executes the first data processing task in a case that the operation status value of the first distributed synchronization lock is a preset value representing an idle state, and a task type value of the first distributed synchronization lock satisfies an execution condition of the first data processing task, and transmits a task completion instruction to the hardware synchronization lock management unit after the first data processing task is completed; the hardware synchronization lock management unit updates, based on the task completion instruction, a task type value of a first hardware synchronization lock indicated by the first synchronization lock identifier in a hardware synchronization lock sequence; and the vector processing unit executes the second data processing task in a case that the task type value of the first hardware synchronization lock is updated.

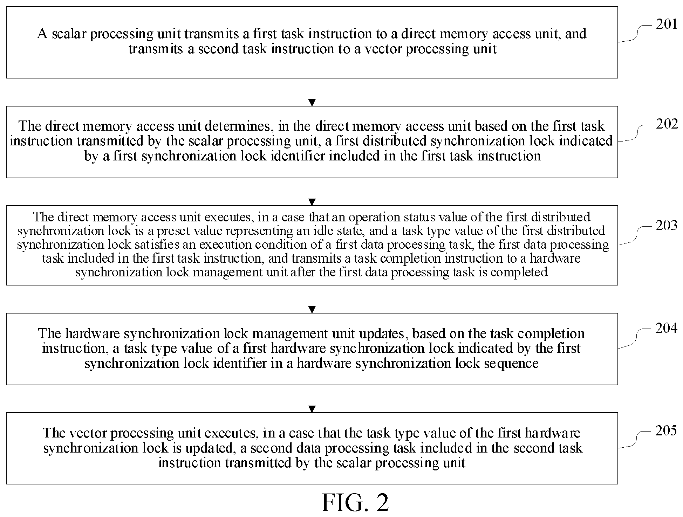

FIG. 2 is a flowchart of a data processing method according to an embodiment of the present disclosure. The method is applicable to a data processing system. The data processing system includes a direct memory access unit, a vector processing unit, a scalar processing unit, and a hardware synchronization lock management unit. Referring to FIG. 2, the method includes:
**201: The scalar processing unit transmits a first task instruction to the direct memory access unit, and transmits a second task instruction to the vector processing unit.**

In this embodiment of the present disclosure, the data processing system may be configured in any type of processor such as an AI processor, a central processing unit, a graphic processing unit, and a digital signal processor. The data processing system may alternatively be configured in an AI chip, a system on chip, a PCB carrying a chip, or a terminal. This is not limited in this embodiment of the present disclosure.

The direct memory access unit in the data processing system can move data between an external memory and an internal memory of a data system. In this embodiment of the present disclosure, an example in which the direct memory access unit moves data to be processed in the external memory to the inside of the data processing system. The vector processing unit can process the data to be processed that has been moved by the direct memory access unit to the inside of the data processing system. The scalar processing unit is configured to respectively transmit a task instruction to the direct memory access unit and the vector processing unit. Correspondingly, the direct memory access unit and the vector processing unit can determine, by using the received task instruction, information such as a task to be executed, a task type of a task, and an execution condition of a task.

Because the direct memory access unit and the vector processing unit need to execute many tasks, there is a timing dependency between a task executed by the direct memory access unit and a task executed by the vector. For example, if the vector processing unit executes a task of processing data, the direct memory access unit needs to execute an execution result of a task of moving data. Therefore, a timing relationship between the direct memory access unit and by the vector processing unit in executing the task needs to be controlled, to ensure the data processing efficiency of the data processing system. In this embodiment of the present disclosure, a hardware synchronization lock is used to control the timing relationship between the direct memory access unit and the vector processing unit in executing the task. Correspondingly, task instructions transmitted by the scalar processing unit to the direct memory access unit and the vector processing unit include the same synchronization lock identifier, that is, the first task instruction and the second task instruction include the same synchronization lock identifier. The synchronization lock identifier can indicate any idle hardware synchronization lock in the hardware synchronization lock sequence. The same hardware synchronization lock is specified for the direct memory access unit and the vector processing unit, so that the timing relationship between the direct memory access unit and the vector processing unit in executing the task can be controlled by using the hardware synchronization lock.

For example, controlling the timing relationship by using the hardware synchronization lock may be: before the direct memory access unit executes a task of moving data, setting a task type value of the corresponding hardware synchronization lock to 0. After the direct memory access unit completes the execution of the task, the hardware synchronization lock management unit updates the task type value of the hardware synchronization lock to 1. The vector processing unit can determine, by using the task type value of the hardware synchronization lock, whether the direct memory access unit completes the execution of the task. When the task type value of the hardware synchronization lock is updated to 1, the vector processing unit determines that the direct memory access unit completes the execution of the task, and the vector processing unit can execute a task of processing target data.

202: The direct memory access unit determines, in the direct memory access unit based on the first task instruction transmitted by the scalar processing unit, a first distributed synchronization lock indicated by a first synchronization lock identifier included in the first task instruction.

In this embodiment of the present disclosure, the direct memory access unit includes a plurality of distributed synchronization locks corresponding to the hardware synchronization lock sequence. After the direct memory access unit receives the first task instruction transmitted by the scalar processing unit, the direct memory access unit determines, in the direct memory access unit based on the first synchronization lock identifier included in the first task instruction, the first distributed synchronization lock corresponding to the first synchronization lock identifier in the plurality of distributed synchronization locks. Because the distributed synchronization lock is consistent with the corresponding hardware synchronization lock in the hardware synchronization lock sequence, the direct memory access unit can directly determine, according to related information of the first distributed synchronization lock, whether to execute the first data processing task.

**203: The direct memory access unit executes, in a case that an operation status value of the first distributed synchronization lock is a preset value representing an idle state, and a task type value of the first distributed synchronization lock satisfies an execution condition of a first data processing task, the first data processing task included in the first task instruction, and transmits a task completion instruction to the hardware synchronization lock management unit after the first data processing task is completed.**

In this embodiment of the present disclosure, the direct memory access unit determines, according to the current operation status value of the first distributed synchronization lock and the task type value of the first distributed synchronization lock, whether to currently execute the first data processing task. The operation status value of the first distributed synchronization lock includes an idle state and a non-idle state. The idle state represents that execution of a previous task corresponding to the distributed synchronization lock is completed, and the direct memory access unit can currently execute the first data processing task. The non-idle state represents that the previous task corresponding to the distributed synchronization lock is being executed, and the direct memory access unit cannot currently execute the first data processing task.

Whether the execution condition of the first data processing task is currently satisfied can be determined by using the task type value of the first distributed synchronization lock. The execution condition is configured for controlling a relationship between the task type value of the first distributed synchronization lock and execution of the first data processing task. The execution condition is configured for the task, so that the timing of executing the task by the direct memory access unit can be controlled by using the distributed synchronization lock. Therefore, in a case that the operation status value of the first distributed synchronization lock is the preset value representing the idle state, and the task type value of the first distributed synchronization lock satisfies the execution condition of the first data processing task, the first data processing task can be currently executed. The direct memory access unit can move the data to be processed from the external memory to the inside of the data processing system by executing the first data processing task. After the direct memory access unit completes data moving, the direct memory access unit transmits the task completion instruction to the hardware synchronization lock management unit. The task completion instruction is configured for notifying the hardware synchronization lock management unit that execution of the current first data processing task is completed.

**204: The hardware synchronization lock management unit updates, based on the task completion instruction, a task type value of a first hardware synchronization lock indicated by the first synchronization lock identifier in a hardware synchronization lock sequence.**

In this embodiment of the present disclosure, the hardware synchronization lock management unit is configured to manage a plurality of hardware synchronization locks in the hardware synchronization lock sequence. After receiving the task completion instruction, the hardware synchronization lock management unit determines the first hardware synchronization lock corresponding to the first synchronization lock identifier in the hardware synchronization lock sequence. The hardware synchronization lock management unit updates the task type value of the first hardware synchronization lock.

**205: The vector processing unit executes, in a case that the task type value of the first hardware synchronization lock is updated, a second data processing task included in the second task instruction transmitted by the scalar processing unit.**

In this embodiment of the present disclosure, the vector processing unit can determine, according to an updated task type value of the first hardware synchronization lock, whether to execute a task of processing data. In a case that the task type value of the first hardware synchronization lock is updated, the vector processing unit determines that execution of the first data processing task is completed, and if an execution condition of the second data processing task is currently satisfied, the vector processing unit executes the second data processing task. The second data processing task is for the vector processing unit to process the data to be processed that has been moved by the direct memory access unit to the inside of the data processing system.

An embodiment of the present disclosure provides a data processing method performed by a data processing system. The scalar processing unit can respectively transmit the task instruction to the direct memory access unit and the vector processing unit. The scalar processing unit does not need to transmit the task to the vector processing unit after waiting for the direct memory access unit to complete execution of the task, which can improve the processing efficiency of the scalar processing unit. Correspondingly, the direct memory access unit can determine the first distributed synchronization lock in the direct memory access unit according to the first synchronization lock identifier in the first task instruction transmitted by the scalar processing unit. Further, the direct memory access unit can determine, according to the operation status value of the first distributed synchronization lock and the task type value of the first distributed synchronization lock, whether to currently execute the first data processing task. The scalar processing unit does not need to determine when the direct memory access unit executes the first data processing task, thereby achieving decoupling from the scalar processing unit. In addition, after the direct memory access unit completes the task, the direct memory access unit transmits the task completion instruction to the hardware synchronization lock management unit. The hardware synchronization lock management unit can update the task type value of the first hardware synchronization lock in the hardware synchronization lock sequence based on the task completion instruction. In response to the task type value of the first hardware synchronization lock being updated, the vector processing unit executes the second data processing task in time, thereby improving the data processing efficiency of the processor.

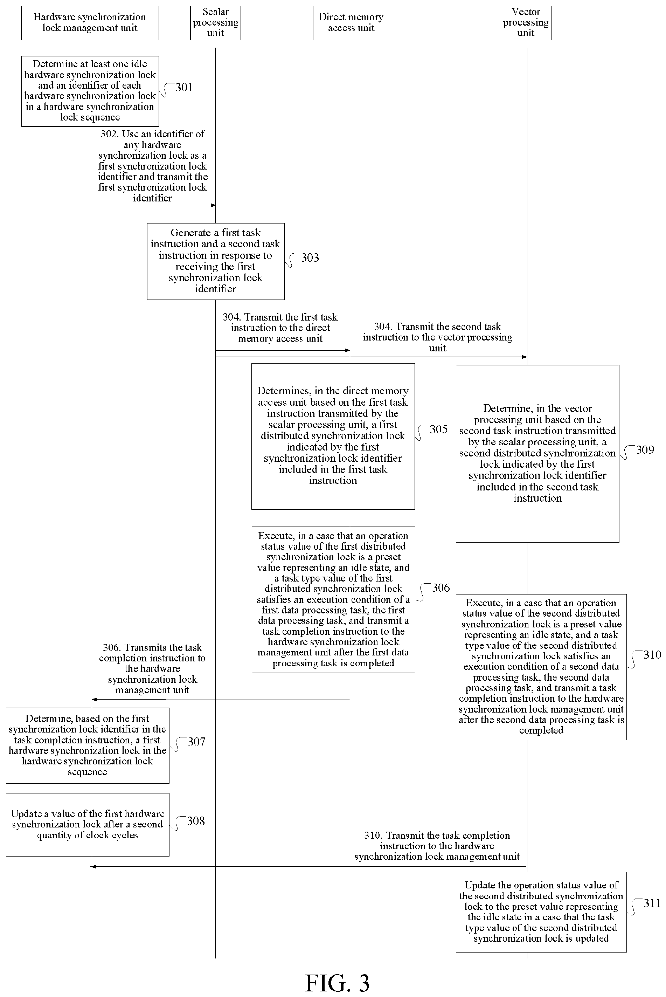

FIG. 3 is an interaction flowchart of a data processing method according to an embodiment of the present disclosure. The method is applicable to a data processing system. The data processing system includes a direct memory access unit, a vector processing unit, a scalar processing unit, and a hardware synchronization lock management unit. Referring to FIG. 3, the method includes:

**301: The hardware synchronization lock management unit determines at least one idle hardware synchronization lock and an identifier of each hardware synchronization lock in a hardware synchronization lock sequence.**

In this embodiment of the present disclosure, the data processing system may be configured in any type of processor such as an AI processor, a central processing unit, a graphic processing unit, and a digital signal processor. The data processing system may alternatively be configured in an AI chip, a system on chip, a PCB carrying a chip, or a terminal. This is not limited in this embodiment of the present disclosure.

In response to the data processing system receiving a data processing task, the data processing system invokes the hardware synchronization lock management unit to determine an idle hardware synchronization lock in the hardware synchronization lock sequence to assist in executing the data processing task. The at least one idle hardware synchronization lock is configured for controlling a timing relationship between the direct memory access unit and the vector processing unit in executing the data processing task.

**302: The hardware synchronization lock management unit transmits an identifier of any hardware synchronization lock as a first synchronization lock identifier to a scalar processing unit.**

In this embodiment of the present disclosure, after receiving the data processing task, the data processing system needs to invoke the direct memory access unit and the vector processing unit to execute the data processing task. For example, the data processing task is to process target data stored in an external memory. During executing the data processing task, the direct memory access unit needs to first move the target data stored in the external memory to the inside of the data processing system, and then the vector processing unit processes the target data inside the data processing system. Therefore, the data processing system needs to transmit a corresponding task to the direct memory access unit and the vector processing unit, and controls, by using the idle hardware synchronization lock, a timing relationship between the direct memory access unit and the vector processing unit in executing the task.

In some embodiments, the hardware synchronization lock management unit may transmit any idle hardware synchronization lock to the scalar processing unit. Correspondingly, the hardware synchronization lock management unit first determines at least one idle hardware synchronization lock from the hardware synchronization lock sequence. Then, after determining the at least one idle hardware synchronization lock, the hardware synchronization lock management unit transmits an identifier of any idle hardware synchronization lock as the first synchronization lock identifier to the scalar processing unit. The first synchronization lock identifier is configured for indicating a hardware synchronization lock for controlling the timing relationship in the hardware synchronization lock sequence. The scalar processing unit is configured to transmit the task instruction to the direct memory access unit and the vector processing unit. The first synchronization lock identifier is transmitted to the scalar processing unit, so that during transmitting the task instruction to the direct memory access unit and the vector processing unit, the scalar processing unit transmits the same first synchronization lock identifier as a part of the task instruction to the direct memory access unit and the vector processing unit. Further, it guarantees the timing relationship between the direct memory access unit and the vector processing unit in executing the data processing task.

In some embodiments, the hardware synchronization lock management unit can determine the idle hardware synchronization lock by using a leading zero detection method. Correspondingly, the hardware synchronization lock management unit detects the hardware synchronization lock sequence from a low bit and uses an identifier of the first detected idle hardware synchronization lock as the first synchronization lock identifier.

**303: The scalar processing unit generates a first task instruction and a second task instruction in response to receiving the first synchronization lock identifier.**

In this embodiment of the present disclosure, after the scalar processing unit receives the first synchronization lock identifier, the scalar processing unit can generate the first task instruction transmitted to the direct memory access unit and the second task instruction transmitted to the vector processing unit. During generating the first task instruction, the scalar processing unit places the first synchronization lock identifier and a first data processing task to be executed by the direct memory access unit into the first task instruction. During generating the second task instruction, the scalar processing unit places a second synchronization lock identifier and a second data processing task to be executed by the vector processing unit into the second task instruction. The first data processing task is to move the target data stored in the external memory to the inside of the data processing system. The second data processing task is to process the target data inside the data processing system. The first synchronization lock identifier and a first data processing task are transmitted as the first task instruction to the direct memory access unit, and the first synchronization lock identifier and the second data processing task are transmitted as the second task instruction to the vector processing unit, so that the direct memory access unit and the vector processing unit can determine the corresponding hardware synchronization lock according to the first synchronization lock identifier in the task instruction. Further, the direct memory access unit and the vector processing unit can determine the timing of executing the corresponding data processing task according to the hardware synchronization lock, so that the timing between the direct memory access unit and the vector processing unit in task execution is controlled by using the hardware synchronization lock, thereby improving the data processing efficiency of the data processing system.

**304: The scalar processing unit transmits the first task instruction to the direct memory access unit, and transmits the second task instruction to the vector processing unit.**

In this embodiment of the present disclosure, the scalar processing unit transmits the first task instruction to the direct memory access unit, and transmits the second task instruction to the vector processing unit.

In some embodiments, the scalar processing unit may respectively transmit the first task instruction and the second task instruction to the direct memory access unit and the vector processing unit simultaneously. Alternatively, the scalar processing unit may first transmit the first task instruction to the direct memory access unit, and then transmit the second task instruction to the vector processing unit. Alternatively, the scalar processing unit may first transmit the second task instruction to the vector processing unit, and then transmit the first task instruction to the direct memory access unit. The timing of transmitting the first task instruction and the second task instruction is not limited in this embodiment of the present disclosure.

**305: The direct memory access unit determines, in the direct memory access unit based on the first task instruction transmitted by the scalar processing unit, a first distributed synchronization lock indicated by the first synchronization lock identifier included in the first task instruction.**

In this embodiment of the present disclosure, the direct memory access unit receives the first task instruction transmitted by the scalar processing unit. The direct memory access unit determines the first synchronization lock identifier included in the first task instruction. The direct memory access unit includes a plurality of distributed synchronization locks corresponding to the hardware synchronization lock sequence. The direct memory access unit can determine, based on the first synchronization lock identifier, the first distributed synchronization lock corresponding to the first synchronization lock identifier in the plurality of distributed synchronization locks in the direct memory access unit. In addition, the distributed synchronization lock is consistent with the corresponding hardware synchronization lock in the hardware synchronization lock sequence within most clock cycles. Therefore, the direct memory access unit can directly determine, according to the operation status value and the task type value of the first distributed synchronization lock, whether to execute the first data processing task included in the first task instruction.

In some embodiments, the operation status value of the first distributed synchronization lock includes an idle state and a non-idle state. The idle state represents that execution of a previous task corresponding to the distributed synchronization lock is completed, and the direct memory access unit can currently execute the first data processing task. The non-idle state represents that the previous task corresponding to the distributed synchronization lock is being executed, and the direct memory access unit cannot currently execute the first data processing task. Whether the execution condition of the first data processing task is currently satisfied can be determined by using the task type value of the first distributed synchronization lock. The execution condition is configured for controlling a relationship between the task type value of the first distributed synchronization lock and execution of the first data processing task. The execution condition is configured for the task, so that the timing of executing the task by the direct memory access unit can be controlled by using the distributed synchronization lock.

In some embodiments, the direct memory access unit determines the operation status value and the task type value of the first distributed synchronization lock by using two multiplexers. For a first multiplexer in the direct memory access unit, the first multiplexer determines, based on the first synchronization lock identifier included in the first task instruction, the first distributed synchronization lock corresponding to the first synchronization lock identifier and the operation status value of the first distributed synchronization lock in the first synchronization lock sequence. The first synchronization lock sequence is configured for indicating operation status values of the plurality of distributed synchronization locks in the direct memory access unit. The status includes the idle state and the non-idle state. For a second multiplexer in the direct memory access unit, the second multiplexer determines, based on the first synchronization lock identifier, the task type value of the first distributed synchronization lock in a second synchronization lock sequence. The second synchronization lock sequence is configured for indicating task type values of the plurality of distributed synchronization locks in the direct memory access unit. The direct memory access unit determines the execution condition of the first data processing task based on a task type of the first data processing task included in the first task instruction. The execution condition is configured for indicating a condition to be satisfied by the task type value of the first distributed synchronization lock. The task types include a read task type and a write task type. The first distributed synchronization lock, the operation status value of the first distributed synchronization lock, and the task type value of the first distributed synchronization lock can be quickly determined from two synchronization lock sequences by using the two multiplexers in the direct memory access unit. Therefore, the efficiency of executing the first data processing task by the direct memory access unit is improved.

In some embodiments, the task type of the first data processing task is the read task type. The direct memory access unit uses the task type value of the first distributed synchronization lock being a first value as the execution condition. The first data processing task of the read task type is for the direct memory access unit to read target data to be processed that is stored in the external memory, and moves the target data to the inside of the memory. Different execution conditions can be determined for tasks of different task types by using different values of the first distributed synchronization lock as the execution condition according to the task type of the data processing task, thereby controlling the execution timing between tasks.

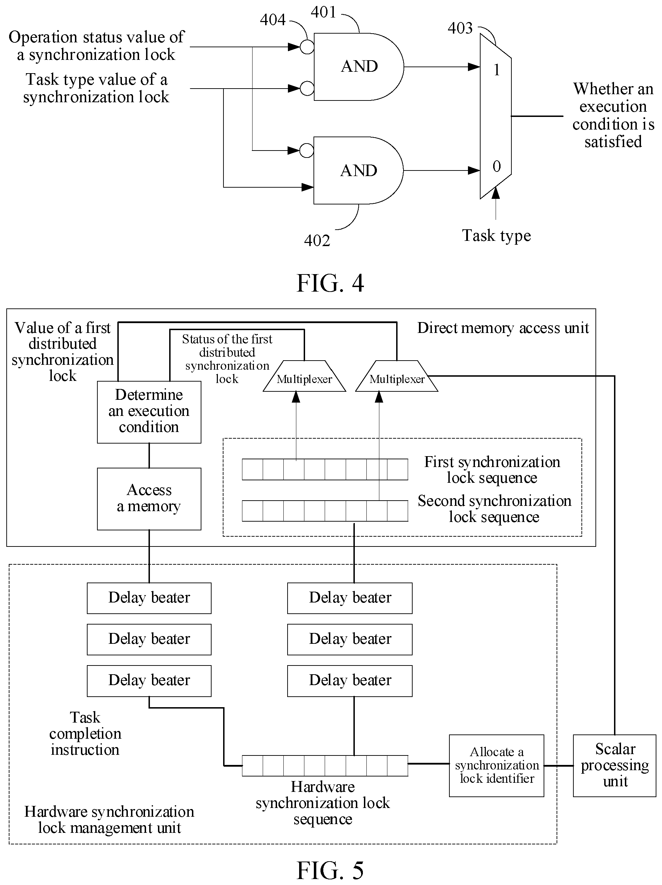

In some embodiments, the direct memory access unit can determine, by using a schematic diagram of determining logic of an execution condition shown in FIG. 4, whether the execution condition of the first data processing task is currently satisfied according to the operation status value of the first distributed synchronization lock, the task type value of the first distributed synchronization lock, and the task type of the first data processing task. As shown in FIG. 4, the determining logic of an execution condition includes an AND logic gate 401, an AND logic gate 402, and a multiplexer 403. A negation symbol 404 is configured for indicating that an input is inverted before an operation status value (busy) of a synchronization lock or a task type value (sync) of a synchronization lock is inputted into the AND logic gate. The negation symbol 401 in FIG. 4 is merely an exemplary example. The direct memory access unit can determine whether to invert the operation status value of the synchronization lock or the task type value of the synchronization lock according to an actual requirement. In this way, the multiplexer determines, according to an output result of the AND logic gate, whether the data processing task can be currently executed. Therefore, the multiplexer can determine, according to an output of the AND logic gate and a task type (sync_set_value), whether an execution condition of the data processing task is currently satisfied, and output a determining result (issue_en). busy includes two values: 0 and 1. The operation status value busy of the synchronization lock being 0 represents that an operation status of the synchronization lock is a non-idle state, and the operation status value busy of the synchronization lock being 1 represents that an operation status of the synchronization lock is an idle state. sync_set_value also includes two values: 0 and 1. sync_set_value being 1 represents that the task type is a read task, and sync_set_value being 0 represents that the task type is a write task.

For example, for a data processing task of the read task type (sync_set_value is 1), according to the execution logic, in a case that the operation status value of the synchronization lock is a preset value (busy is 1) representing an idle state, and the task type value (sync) of the synchronization lock is 0, the data processing task can be currently executed. Therefore, the direct memory access unit can invert the inputted task type value of the synchronization lock on the AND logic gate 401, and sync inputted to the AND logic gate 401 is 1. The direct memory access unit does not invert the operation status value of the synchronization lock on the AND logic gate 401, and busy inputted to the AND logic gate 401 is 1. Two inputs of the AND logic gate 401 are both 1, and an output of the AND logic gate 401 is 1. Correspondingly, because currently busy is 1 and sync is 0, the direct memory access unit may invert both or neither of busy and sync on the AND logic gate 402, or may invert only busy but not invert sync on the AND logic gate 402. In the foregoing three cases, outputs of the AND logic gate 402 are all 0. Therefore, the multiplexer 403 can determine, according to the value outputted by the AND logic gate 401 being 1 and the value outputted by the AND logic gate 402 being 0, that the data processing task can be currently executed, and the determining logic of the direct memory access unit is consistent with the execution logic of the data processing task.

In some embodiments, the direct memory access unit can determine the execution condition of the first data processing task according to a task type indicated by sync_set_value, that is, determine sync when the execution condition is satisfied. For example, when sync_set_value of the first data processing task is 1, the first data processing task is a read task. The direct memory access unit uses sync being 0 as an execution condition, that is, the first value is 0. Therefore, the execution condition of the first data processing task is satisfied only when busy is 1 and sync is 0. Correspondingly, when busy is 1 and sync is 0, the multiplexer 403 outputs a determining result indicating that the execution condition is currently satisfied. When busy and sync are other values, the multiplexer 403 outputs a determining result indicating that the execution condition is not currently satisfied.

**306: The direct memory access unit executes, in a case that an operation status value of the first distributed synchronization lock is a preset value representing an idle state, and a task type value of the first distributed synchronization lock satisfies an execution condition of the first data processing task, the first data processing task included in the first task instruction, and transmits a task completion instruction to the hardware synchronization lock management unit.**

In this embodiment of the present disclosure, in a case that the direct memory access unit determines that the operation status value of the first distributed synchronization lock is the preset value representing the idle state, and the task type value of the first distributed synchronization lock satisfies the execution condition of the first data processing task, the first data processing task can be currently executed. The direct memory access unit executes the first data processing task and moves target data to be processed from the external memory to the inside of the data processing system. After the direct memory access unit completes data moving, the direct memory access unit transmits the task completion instruction to the hardware synchronization lock management unit. The task completion instruction is configured for notifying the hardware synchronization lock management unit that execution of the current first data processing task is completed.

In some embodiments, when the direct memory access unit executes the first data processing task, the direct memory access unit enables a req_interface instruction to perform an access request on the external memory, to move target data from the external memory. In a case that the access request is transmitted completely, and the access request is completely processed by the external memory, the direct memory access unit completes moving of the target data. Then, the direct memory access unit transmits the task completion instruction to the hardware synchronization lock management unit.

**307: The hardware synchronization lock management unit determines the first hardware synchronization lock in the hardware synchronization lock sequence based on the first synchronization lock identifier in the task completion instruction.**

In this embodiment of the present disclosure, the hardware synchronization lock management unit receives the task completion instruction transmitted by the direct memory access unit. The hardware synchronization lock management unit determines the first synchronization lock identifier included in the task completion instruction. The hardware synchronization lock management unit determines the first hardware synchronization lock corresponding to the first synchronization lock identifier in the hardware synchronization lock sequence. Both the first hardware synchronization lock and the first distributed synchronization lock in the direct memory access unit correspond to the first synchronization lock identifier.

**308: The hardware synchronization lock management unit updates the task type value of the first hardware synchronization lock after a second number of clock cycles.**

In this embodiment of the present disclosure, the hardware synchronization lock management unit and the direct memory access unit are located at different positions in the data processing system, and the positions are remotely distributed. Therefore, updating of the task type value of the first hardware synchronization lock needs to be delayed by using a delay beater, to satisfy a timing requirement of the hardware synchronization lock management unit and the direct memory access unit. A number of delayed clock cycles is associated with a number of delay beaters. The hardware synchronization lock management unit can update the task type value of the first hardware synchronization lock after the second number of clock cycles by using a second number of delay beaters. The second number may be a preset value, such as 2, 3, or 5. This is not limited in this embodiment of the present disclosure. The task type value of the first hardware synchronization lock is updated after the direct memory access unit completes the first data processing task, so that the task type value of the first hardware synchronization lock represents an execution status of a task executed by the direct memory access unit, and the task type value of the first hardware synchronization lock controls the timing of the task executed by the direct memory access unit.

In some embodiments, the hardware synchronization lock management unit can determine an updated value of the first hardware synchronization lock according to a type of the first data processing task. In a case that the task type of the first data processing task is the read task type, the hardware synchronization lock management unit updates the task type value of the first hardware synchronization lock from the first value to a second value after the second number of clock cycles. For example, the hardware synchronization lock management unit updates the task type value of the first hardware synchronization lock from 0 to 1 after three clock cycles. The first hardware synchronization lock is updated to different values according to the task type of the data processing task, so that whether execution conditions of tasks of different task types are satisfied can be determined according to the task type value of the first hardware synchronization lock. In this way, the execution timing of the task is controlled according to the hardware synchronization lock.

For example, the hardware synchronization lock management unit can determine the first data processing task and the updated value of the first hardware synchronization lock by using sync_set_value. In a case that sync_set_value is 1, the task type of the first data processing task is the read task, and the updated value of the first hardware synchronization lock is 1. In a case that sync_set_value is 0, the task type of the first data processing task is the write task, and the updated value of the first hardware synchronization lock is 0.

To describe the foregoing process of executing the first data processing task by the direct memory access unit more clearly, the foregoing process is described below with reference to a flowchart of data processing shown in FIG. 5. As shown in FIG. 5, in response to the data processing system receiving the data processing task, the hardware synchronization lock management unit determines at least one idle hardware synchronization lock and an identifier of each hardware synchronization lock in the hardware synchronization lock sequence. Then, the hardware synchronization lock management unit transmits an identifier of any hardware synchronization lock as the first synchronization lock identifier to the scalar processing unit. The scalar processing unit receives the first synchronization lock identifier, and the scalar processing unit transmits the first synchronization lock identifier and the first data processing task as the first task instruction to the direct memory access unit. The direct memory access unit determines, based on the received first task instruction by using two multiplexers (mux), the first distributed synchronization lock corresponding to the first synchronization lock identifier and the operation status value (busy) of the first distributed synchronization lock in the first synchronization lock sequence, and determines the task type value (sync) of the first distributed synchronization lock in the second synchronization lock sequence. Then, the direct memory access unit determines, according to the operation status value of the first distributed synchronization lock, the task type value of the first distributed synchronization lock, and the task type of the first data processing task, whether to execute the first data processing task. For example, only in a case that the task type of the first data processing task is the read task, the operation status value of the first synchronization lock is the preset value representing the idle state, that is, busy is 1, and the task type value of the first synchronization lock is 0, the first data processing task can be executed. In a case that the determining result indicates that the first data processing task can be executed, the direct memory access unit executes the first data processing task. The direct memory access unit accesses the external memory and moves the target data to be processed in the external memory to the inside of the data processing system. After the direct memory access unit completes data moving, the direct memory access unit transmits the task completion instruction to the hardware synchronization lock management unit. The hardware synchronization lock management unit determines the first hardware synchronization lock in the hardware synchronization lock sequence according to the first synchronization lock identifier in the task completion instruction. The hardware synchronization lock management unit updates the task type value of the first hardware synchronization lock from 0 to 1 after three clock cycles by using three delay beaters. The task type value of the first distributed synchronization lock corresponding to the first synchronization lock identifier in the second synchronization lock sequence is updated from 0 to 1 after three clock cycles by using the three delay beaters.

**309: The vector processing unit determines, in the vector processing unit based on the second task instruction transmitted by the scalar processing unit, a second distributed synchronization lock indicated by the first synchronization lock identifier included in the second task instruction.**

In this embodiment of the present disclosure, the vector processing unit receives the second task instruction transmitted by the scalar processing unit. The vector processing unit determines the first synchronization lock identifier included in the second task instruction. Similar to the direct memory access unit, the vector processing unit also includes a plurality of distributed synchronization locks corresponding to the hardware synchronization lock sequence. The vector processing unit can determine, based on the first synchronization lock identifier, the second distributed synchronization lock corresponding to the first synchronization lock identifier in the plurality of distributed synchronization locks in the vector processing unit. In addition, the second distributed synchronization lock in the vector processing unit, the first distributed synchronization lock in the direct memory access unit, and the first hardware synchronization lock are consistent within most clock cycles. Therefore, the vector processing unit can directly determine, according to the operation status value of the second distributed synchronization lock and the task type value of the second distributed synchronization lock, whether to execute the first data processing task included in the second task instruction. Therefore, the vector processing unit does not need to determine the operation status value and the task type value of the first hardware synchronization lock in an external hardware synchronization lock sequence, thereby achieving decoupling from the external hardware synchronization lock sequence.

**310: The vector processing unit executes the second data processing task in a case that an operation status value of the second distributed synchronization lock is a preset value representing an idle state, and a task type value of the second distributed synchronization lock satisfies an execution condition of a second data processing task, and transmits a task completion instruction to the hardware synchronization lock management unit after the second data processing task is completed.**

In this embodiment of the present disclosure, in a case that the vector processing unit determines that the operation status value of the second distributed synchronization lock is the preset value representing the idle state, and the task type value of the second distributed synchronization lock satisfies the execution condition of the second data processing task, the second data processing task can be currently executed. The vector processing unit executes the second data processing task, and processes the target data inside the data processing system. After the vector processing unit completes processing of the target data, the vector processing unit transmits the task completion instruction to the hardware synchronization lock management unit. The task completion instruction is configured for notifying the hardware synchronization lock management unit that execution of the current first data processing task is completed.

In some embodiments, when the vector processing unit executes the second data processing task, the vector processing unit enables the req_interface instruction to perform an access request on an internal memory unit of the data processing system to process the target data. When the access request is transmitted completely, and the access request is completely processed by the internal memory unit, the vector processing unit completes processing of the target data. Then, the vector processing unit transmits the task completion instruction to the hardware synchronization lock management unit.

**311: The vector processing unit updates, in a case that the task type value of the second distributed synchronization lock is updated, the operation status value of the second distributed synchronization lock to the preset value representing the idle state, the task type value of the second distributed synchronization lock being updated to the task type value of the first hardware synchronization lock after a first number of clock cycles since the task type value of the first hardware synchronization lock is updated.**

In this embodiment of the present disclosure, similar to the direct memory access unit, after completing execution of the second data processing task, the vector processing unit transmits the task completion instruction to the hardware synchronization lock management unit. Correspondingly, after receiving the task completion instruction, the hardware synchronization lock management unit delays updating of the task type value of the first hardware synchronization lock by several clock cycles by using the delay beater. In a case that the task type value of the first hardware synchronization lock is updated, the task type value of the second distributed synchronization lock is updated to the task type value of the first hardware synchronization lock after the first number of clock cycles by using a first number of delay beaters. The first number may be a preset value, such as 2, 3, or 5. This is not limited in this embodiment of the present disclosure. In a case that the task type value of the second distributed synchronization lock is updated, the vector processing unit updates the operation status value of the second distributed synchronization lock to represent the idle state, to indicate that the current vector processing unit completes execution of the second data processing task. Further, the vector processing unit can determine, according to a new status of the second synchronization lock, whether to execute a next task.

In some embodiments, similar to the direct memory access unit, the vector processing unit includes a third synchronization lock sequence and a fourth synchronization lock sequence. The third synchronization lock sequence is configured for indicating operation status values of the plurality of distributed synchronization locks in the vector processing unit. The fourth synchronization lock sequence is configured for indicating task type values of the plurality of distributed synchronization locks in the vector processing unit. Therefore, in a case that the task type value of the first hardware synchronization lock is updated, after the first number of clock cycles, the task type value of the second distributed synchronization lock in the fourth synchronization lock sequence is updated to the task type value of the first hardware synchronization lock. In a case that the task type value of the second distributed synchronization lock is updated, the vector processing unit updates the operation status value of the second distributed synchronization lock in the third synchronization lock sequence to represent the idle state.

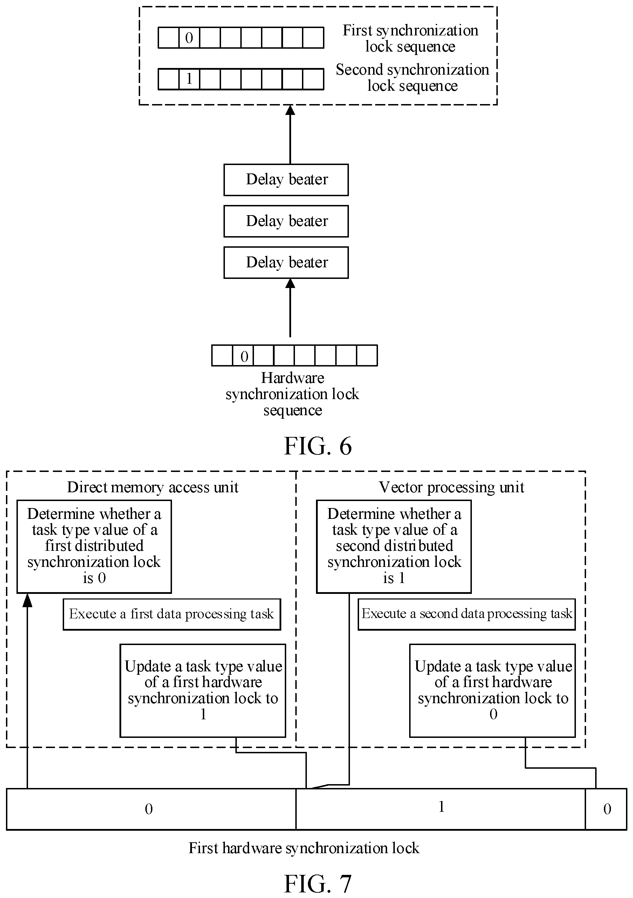

After the execution of the task by the vector processing unit is completed, updating of the task type value of the first hardware synchronization lock is delayed, and then updating of the task type value of the second distributed synchronization lock is delayed. Therefore, there is a delay between the vector processing unit completing execution of the task and the task type value of the second distributed synchronization lock being updated. Only in a case that the task type value of the second distributed synchronization lock is updated, the operation status value of the second distributed synchronization lock can be updated to the preset value representing the idle state, so as to avoid a problem of task execution conflict when two consecutive data processing tasks both correspond to the second distributed synchronization lock. For example, in a case that there is no third synchronization lock sequence, after completing execution of the first data processing task, the vector processing unit updates the task type value of the first hardware synchronization lock from 1 to 0. A time at which the task type value of the second distributed synchronization lock is updated lags behind a time at which the task type value of the first hardware synchronization lock is updated. In this case, the task type value of the second distributed synchronization lock is still 1, and has not been updated to 0. If determining, according to the current task type value of the second distributed synchronization lock, that the second data processing task can be executed, the vector processing unit starts to execute the second data processing task, which causes a task conflict problem. The operation status value of the distributed synchronization lock is introduced, and the operation status value of the distributed synchronization lock is also used as one of determining conditions for determining whether the task can be executed, so that the task conflict problem can be avoided. As shown in FIG. 6, in a case that the task type value of the first hardware synchronization lock is updated from 1 to 0, but the task type value of the second distributed synchronization lock in the fourth synchronization lock sequence has not been updated to 0, the operation status value of the second distributed synchronization lock in the third synchronization lock sequence is in the non-idle state, that is, busy is 0. When the task type value of the second distributed synchronization lock is updated from 1 to 0, the operation status value of the second distributed synchronization lock is updated to represent the idle state, that is, busy is updated from 0 to 1.

When the direct memory access unit executes the first data processing task and the vector processing unit executes the second data processing task, an update status of the task type value of the first hardware synchronization lock is shown in FIG. 7. In a case that the direct memory access unit determines that the task type value of the first distributed synchronization lock is 0, and the operation status value of the first distributed synchronization lock is the preset value representing the idle state, the direct memory access unit executes the first data processing task. After completing execution of the first data processing task, the direct memory access unit instructs the hardware synchronization lock management unit to update the task type value of the first hardware synchronization lock to 1. In a case that the vector processing unit determines that the task type value of the second distributed synchronization lock is 1, and the operation status value of the second distributed synchronization lock is the preset value representing the idle state, the vector processing unit executes the second data processing task. After completing execution of the second data processing task, the vector processing unit instructs the hardware synchronization lock management unit to update the task type value of the first hardware synchronization lock to 0.

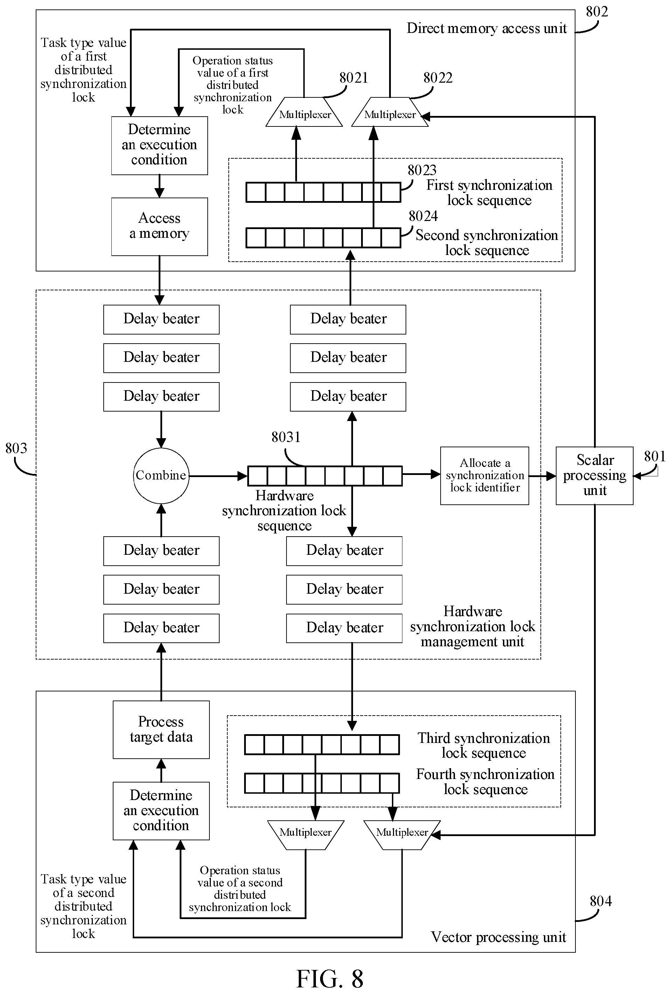

To describe the foregoing process of executing the data processing task by the direct memory access unit and the vector processing unit in the data processing system more clearly, the foregoing process is described below with reference to a flowchart of data processing shown in FIG. 8. As shown in FIG. 8, a procedure of executing the first data processing task by the direct memory access unit is the same as the flowchart shown in FIG. 5, and details are not described herein again. In response to the data processing system receiving the data processing task, the hardware synchronization lock management unit determines at least one idle hardware synchronization lock and an identifier of each hardware synchronization lock in the hardware synchronization lock sequence. Then, the hardware synchronization lock management unit transmits an identifier of any hardware synchronization lock as the first synchronization lock identifier to the scalar processing unit. The scalar processing unit receives the first synchronization lock identifier, and the scalar processing unit transmits the first synchronization lock identifier and the second data processing task as the second task instruction to the vector processing unit. The vector processing unit determines, based on the received second task instruction by using two multiplexers (mux), the second distributed synchronization lock corresponding to the second synchronization lock identifier and the operation status value (busy) of the second distributed synchronization lock in the third synchronization lock sequence, and determines the task type value (sync) of the second distributed synchronization lock in the fourth synchronization lock sequence. Then, the vector processing unit determines, according to the operation status value of the second distributed synchronization lock, the task type value of the second distributed synchronization lock, and the task type of the second data processing task, whether to execute the second data processing task. For example, only in a case that the task type of the second data processing task is the write task, the operation status value of the second synchronization lock is the preset value representing the idle state, that is, busy is 1, and the task type value of the second synchronization lock is 1, the second data processing task can be executed. In a case that the determining result indicates that the second data processing task can be executed, the vector processing unit executes the second data processing task. The vector processing unit processes the target data inside the data processing system. After the vector processing unit completes processing of the target data, the vector processing unit transmits the task completion instruction to the hardware synchronization lock management unit. The hardware synchronization lock management unit determines the first hardware synchronization lock in the hardware synchronization lock sequence according to the first synchronization lock identifier in the task completion instruction. The hardware synchronization lock management unit updates the task type value of the first hardware synchronization lock from 1 to 0 after three clock cycles by using three delay beaters. The task type value of the second distributed synchronization lock corresponding to the first synchronization lock identifier in the second synchronization lock sequence is updated from 1 to 0 after three clock cycles by using the three delay beaters. The hardware synchronization lock management unit can further combine the task completion instructions transmitted by the direct memory access unit and the vector processing unit, and update the task type value of the corresponding hardware synchronization lock in the hardware synchronization lock sequence according to a plurality of combined task completion instructions. In some embodiments, the hardware synchronization lock management unit can further receive a task completion instruction transmitted by a unit other than the direct memory access unit and the vector processing unit. Correspondingly, the hardware synchronization lock management unit combines task completion instructions of different units, and updates the task type value of the corresponding hardware synchronization lock in the hardware synchronization lock sequence, which can improve the efficiency of updating the task type value of the hardware synchronization lock.

The foregoing operations 301 to 311 are described by using an example in which the direct memory access unit executes the read task. In other words, the direct memory access unit reads the target data to be processed from the external memory, and moves the target data to the inside of data processing system. In some embodiments, the read task may alternatively be executed by the vector processing unit. Correspondingly, the vector processing unit reads target data to be processed inside the data processing system, and processes the target data. Then, the direct memory access unit writes the target data processed by the vector processing unit into the external memory.

In some embodiments, the process of executing the read task by the vector processing unit includes: The scalar processing unit transmits a third task instruction to the vector processing unit, and transmits a fourth task instruction to the direct memory access unit, the third task instruction including a third data processing task and a third distributed synchronization lock indicated by the second synchronization lock identifier, and the fourth task instruction including a fourth data processing task; the vector processing unit executes the third data processing task in a case that an operation status value of the third distributed synchronization lock is the preset value representing the idle state, and a task type value of the third distributed synchronization lock satisfies an execution condition of the third data processing task, and transmits a task completion instruction to the hardware synchronization lock management unit after the third data processing task is completed; the hardware synchronization lock management unit updates, based on the task completion instruction, a task type value of a second hardware synchronization lock indicated by the second synchronization lock identifier in a hardware synchronization lock sequence; and the direct memory access unit executes the fourth data processing task in a case that the task type value of the second hardware synchronization lock is updated.

The foregoing process of executing the read task by the vector processing unit is described below by using operations (1) to (5).
(1) The scalar processing unit transmits the third task instruction to the vector processing unit, and transmits the fourth task instruction to the direct memory access unit.
   After receiving the data processing task, the data processing system needs to invoke the direct memory access unit and the vector processing unit to execute the data processing task. The data processing system invokes the hardware synchronization lock management unit to determine at least one idle hardware synchronization lock and an identifier of each hardware synchronization lock in the hardware synchronization lock sequence. The hardware synchronization lock management unit transmits an identifier of any hardware synchronization lock as a second synchronization lock identifier to the scalar processing unit. After the scalar processing unit receives the first synchronization lock identifier, the scalar processing unit uses the second synchronization lock identifier and the third data processing task to be executed by the vector processing unit as the third task instruction. The scalar processing unit uses the second synchronization lock identifier and the fourth data processing task to be executed by the direct memory access unit as the second task instruction. The scalar processing unit transmits the third task instruction to the vector processing unit, and transmits the fourth task instruction to the direct memory access unit.
(2) The vector processing unit determines, in the vector processing unit based on the third task instruction transmitted by the scalar processing unit, a third distributed synchronization lock indicated by the second synchronization lock identifier included in the third task instruction, the third distributed synchronization lock being configured for determining whether to execute a third data processing task included in the third task instruction.
(3) The vector processing unit executes, in a case that an operation status value of the third distributed synchronization lock is a preset value representing an idle state, and a task type value of the third distributed synchronization lock satisfies an execution condition of the third data processing task, the third data processing task included in the third task instruction, and processes target data inside the data system. After completing execution of the third data processing task, the vector processing unit transmits the task completion instruction to the hardware synchronization lock management unit.
   The task type of the third data processing task is the read task type. The vector processing unit uses the task type value of the third distributed synchronization lock being the first value as the execution condition of the third data processing task. For example, the vector processing unit uses the task type value of the third distributed synchronization lock being 0 as the execution condition of the third data processing task. Different execution conditions can be determined for tasks of different task types by using different values of the third distributed synchronization lock as the execution condition according to the task type of the data processing task, thereby controlling the execution timing of tasks.
(4) The hardware synchronization lock management unit updates, based on the task completion instruction, a task type value of a second hardware synchronization lock indicated by the second synchronization lock identifier in the hardware synchronization lock sequence.
   The task type of the third data processing task is the read task type. The hardware synchronization lock management unit determines the second hardware synchronization lock in the hardware synchronization lock sequence based on the second synchronization lock identifier in the task completion instruction. The hardware synchronization lock management unit updates the task type value of the second hardware synchronization lock from the first value to the second value after a third number of clock cycles. For example, the hardware synchronization lock management unit updates the task type value of the second hardware synchronization lock from 0 to 1 after three clock cycles. The second hardware synchronization lock is updated to different values according to the task type of the data processing task, so that whether execution conditions of tasks of different task types are satisfied can be determined according to the task type value of the second hardware synchronization lock. In this way, the execution timing of the task is controlled according to the hardware synchronization lock.
(5) The direct memory access unit executes, in a case that the task type value of the second hardware synchronization lock is updated, a fourth data processing task included in the fourth task instruction transmitted by the scalar processing unit. The direct memory access unit writes the target data processed by the vector processing unit into the external memory.

An embodiment of the present disclosure provides a data processing method, performed by a data processing system. The scalar processing unit can respectively transmit the task instruction to the direct memory access unit and the vector processing unit. The scalar processing unit does not need to transmit the task to the vector processing unit after waiting for the direct memory access unit to complete execution of the task, which can improve processing efficiency of the scalar processing unit. Correspondingly, the direct memory access unit can determine the first distributed synchronization lock in the direct memory access unit according to the first synchronization lock identifier in the first task instruction transmitted by the scalar processing unit. Further, the direct memory access unit can determine, according to the operation status value of the first distributed synchronization lock and the task type value of the first distributed synchronization lock, whether to currently execute the first data processing task. The scalar processing unit does not need to determine when the direct memory access unit executes the first data processing task, thereby achieving decoupling from the scalar processing unit. In addition, after the direct memory access unit completes the task, the direct memory access unit transmits the task completion instruction to the hardware synchronization lock management unit. The hardware synchronization lock management unit can update the task type value of the first hardware synchronization lock in the hardware synchronization lock sequence based on the task completion instruction. In response to the task type value of the first hardware synchronization lock being updated, the vector processing unit executes the second data processing task in time, thereby improving data processing efficiency of the processor.

An embodiment of the present disclosure further provides a data processing system. Referring to FIG. 8, the data processing system includes: a scalar processing unit 801, a direct memory access unit 802, a hardware synchronization lock management unit 803, and a vector processing unit 804.

The scalar processing unit 801 is configured to transmit a first task instruction to the direct memory access unit 802, and transmit a second task instruction to the vector processing unit 804;
the direct memory access unit 802 is configured to determine, in the direct memory access unit 802 based on the first task instruction transmitted by the scalar processing unit 801, a first distributed synchronization lock indicated by a first synchronization lock identifier included in the first task instruction, the first distributed synchronization lock being configured for determining whether to execute a first data processing task included in the first task instruction;
the direct memory access unit 802 is further configured to: execute, in a case that a operation status value of the first distributed synchronization lock is a preset value representing an idle state, and a task type value of the first distributed synchronization lock satisfies an execution condition of the first data processing task, the first data processing task included in the first task instruction, and transmit a task completion instruction to the hardware synchronization lock management unit 803;
the hardware synchronization lock management unit 803 is configured to update, based on the task completion instruction, a task type value of a first hardware synchronization lock indicated by the first synchronization lock identifier in a hardware synchronization lock sequence 8031; and
the vector processing unit 804 is configured to: execute, in a case that the task type value of the first hardware synchronization lock is updated, a second data processing task included in the second task instruction transmitted by the scalar processing unit 801.

In some embodiments, the vector processing unit 804 is configured to: determine, in the vector processing unit 804 based on the second task instruction transmitted by the scalar processing unit 801, a second distributed synchronization lock indicated by the first synchronization lock identifier included in the second task instruction, the second distributed synchronization lock being configured for determining whether to execute a second data processing task included in the second task instruction; update, in a case that a task type value of the second distributed synchronization lock is updated, an operation status value of the second distributed synchronization lock to the preset value representing the idle state, the task type value of the second distributed synchronization lock being updated to the task type value of the first hardware synchronization lock after a first number of clock cycles since the task type value of the first hardware synchronization lock is updated; and execute, in a case that the operation status value of the second distributed synchronization lock is the preset value representing the idle state, and the task type value of the second distributed synchronization lock satisfies an execution condition of the second data processing task, the second data processing task included in the second task instruction.

In some embodiments, the hardware synchronization lock management unit 803 includes the hardware synchronization lock sequence 8031. The hardware synchronization lock management unit 803 is configured to determine at least one idle hardware synchronization lock and an identifier of each hardware synchronization lock in the hardware synchronization lock sequence 8031; and transmit the identifier of any hardware synchronization lock as the first synchronization lock identifier to the scalar processing unit 801. The scalar processing unit 801 is configured to: generate the first task instruction and the second task instruction in response to receiving the first synchronization lock identifier.

In some embodiments, the direct memory access unit 802 includes a first multiplexer 8021, a second multiplexer 8022, a first synchronization lock sequence 8023, and a second synchronization lock sequence 8024. The first multiplexer 8021 is configured to determine the first distributed synchronization lock and the operation status value of the first distributed synchronization lock in the first synchronization lock sequence 8023 based on the first synchronization lock identifier included in the first task instruction; the first synchronization lock sequence 8023 is configured for indicating operation status values of a plurality of distributed synchronization locks in the direct memory access unit 802, the status including an idle state and a non-idle state, the idle state being configured for indicating that the direct memory access unit 802 is currently capable of executing the first data processing task, and the non-idle state being configured for indicating that the direct memory access unit 802 is currently executing a data processing task corresponding to the first distributed synchronization lock; and the second multiplexer 8022 is configured to determine the task type value of the first distributed synchronization lock in the second synchronization lock sequence 8024 based on the first synchronization lock identifier, the second synchronization lock sequence 8024 being configured for indicating task type values of the plurality of distributed synchronization locks in the direct memory access unit 802. The direct memory access unit 802 is further configured to determine the execution condition of the first data processing task based on a task type of the first data processing task included in the first task instruction, the execution condition being configured for indicating a condition that to be satisfied by the task type value of the first distributed synchronization lock.

In some embodiments, the task type of the first data processing task is a read task type, and the direct memory access unit 802 is configured to use the task type value of the first distributed synchronization lock being a first value as the execution condition.

In some embodiments, the hardware synchronization lock management unit 803 is configured to: determine the first hardware synchronization lock in the hardware synchronization lock sequence 8031 based on the first synchronization lock identifier in the task completion instruction; and update the task type value of the first hardware synchronization lock after a second number of clock cycles.

In some embodiments, the hardware synchronization lock management unit 803 is configured to update the task type value of the first hardware synchronization lock from the first value to a second value after the second number of clock cycles.

In some embodiments, the scalar processing unit 801 is configured to transmit a third task instruction to the vector processing unit 803, and transmit a fourth task instruction to the direct memory access unit 802. The vector processing unit 804 is configured to: determine, in the vector processing unit 804 based on the third task instruction transmitted by the scalar processing unit 801, a third distributed synchronization lock indicated by the second synchronization lock identifier included in the third task instruction, the third distributed synchronization lock being configured for determining whether to execute a third data processing task included in the third task instruction. The vector processing unit 804 is further configured to: execute, in a case that an operation status value of the third distributed synchronization lock is a preset value representing an idle state, and a task type value of the third distributed synchronization lock satisfies an execution condition of the third data processing task, the third data processing task included in the third task instruction, and transmit a task completion instruction to the hardware synchronization lock management unit 803. The hardware synchronization lock management unit 803 is configured to: update, based on the task completion instruction, a task type value of a second hardware synchronization lock indicated by the second synchronization lock identifier in a hardware synchronization lock sequence. The direct memory access unit 802 is configured to: execute, in a case that the task type value of the second hardware synchronization lock is updated, a fourth data processing task included in the fourth task instruction transmitted by the scalar processing unit 801.

In some embodiments, a task type of the third data processing task is a read task type, and the vector processing unit 804 is configured to use the task type value of the third distributed synchronization lock being a first value as the execution condition of the third data processing task.

In some embodiments, the task type of the third data processing task is the read task type, and the hardware synchronization lock management unit 803 is configured to: determine the second hardware synchronization lock in the hardware synchronization lock sequence 8031 based on the second synchronization lock identifier in the task completion instruction; and update the task type value of the second hardware synchronization lock from the first value to the second value after a third number of clock cycles.

The data processing system provided in the foregoing embodiments is only illustrated by division of the foregoing functional modules. During actual application, the foregoing functions can be assigned to different functional modules as required, that is, an internal structure of the terminal is divided into different functional modules, to implement all or some of the functions described above. In addition, the data processing system and data processing method provided in the foregoing embodiments belong to the same idea. For a specific implementation process, refer to the method embodiments, and details are not described herein again.

An embodiment of the present disclosure further provides a terminal. The terminal includes a processor and a memory, the memory having a data processing method stored therein, and the processor being configured to implement the data processing method provided in the foregoing embodiments by using a data processing system.

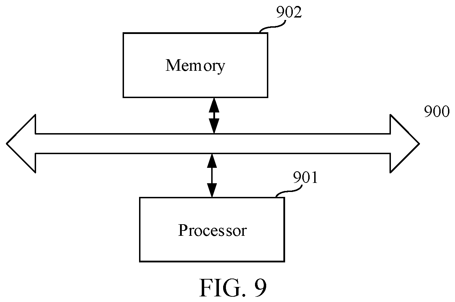

FIG. 9 is a schematic structural diagram of a terminal according to an embodiment of the present disclosure.

The terminal 900 includes: a processor 901 and a memory 902.

The processor 901 may include one or more processing cores, such as a 4-core processor or an 8-core processor. The processor 901 may be implemented by using at least one hardware form of a digital signal processing (DSP), a field programmable gate array (FPGA), and a programmable logic array (PLA). The processor 901 may also include a main processor and a coprocessor. The main processor is a processor configured to process data in an active state, also referred to as a central processing unit (CPU). The coprocessor is a low-power consumption processor configured to process data in a standby state. In some embodiments, the processor 901 may be integrated with a graphics processing unit (GPU). The GPU is configured to be responsible for rendering and drawing content that needs to be displayed on a display screen. In some embodiments, the processor 901 may alternatively include an artificial intelligence (AI) processor. The AI processor is configured to process a computing operation related to machine learning.

The memory 902 may include one or more computer-readable storage media. The computer-readable storage media may be non-transitory. The memory 902 may alternatively include a high-speed random access memory and a non-volatile memory, for example, one or more disk storage devices and flash storage devices. In some embodiments, the non-transitory computer-readable storage medium in the memory 902 is configured to store at least one computer program, and the at least one computer program is configured to be used by the processor 901 to implement the data processing method provided in the method embodiments of the present disclosure.

A person skilled in the art may understand that the structure shown in FIG. 9 does not constitute a limitation to the terminal 900, and the terminal 900 may include more or fewer components than those shown in the figure, or some components may be combined, or a different component deployment may be used.

An embodiment of the present disclosure further provides a computer-readable storage medium. The computer-readable storage medium has at least one computer program stored therein, the at least one computer program being loaded and executed by a processor to implement the data processing method provided in the foregoing embodiments.

An embodiment of the present disclosure further provides a computer program product, including a computer program, when the computer program being loaded and executed by a processor, to implement the data processing method provided in the foregoing embodiments.

A person of ordinary skill in the art may understand that all or some of the operations of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

The technical features in the foregoing embodiments may be randomly combined. For concise description, not all possible combinations of the technical features in the embodiment are described. However, provided that combinations of the technical features do not conflict with each other, the combinations of the technical features are considered as falling within the scope recorded in this specification.

The foregoing embodiments only describe several implementations of the present disclosure, which are described specifically and in detail, but cannot be construed as a limitation to the patent scope of the present disclosure. A person of ordinary skill in the art may make various changes and improvements without departing from the ideas of the present disclosure, which shall all fall within the protection scope of the present disclosure. Therefore, the protection scope of this patent application is subject to the protection scope of the appended claims.

## Claims

1. A data processing method, executable by a data processing system, the data processing system comprising a direct memory access unit, a vector processing unit, a scalar processing unit, and a hardware synchronization lock management unit, the method comprising:
transmitting, by the scalar processing unit, a first task instruction to the direct memory access unit, and transmitting a second task instruction to the vector processing unit, the first task instruction comprising a first data processing task and a first synchronization lock identifier indicating a first distributed synchronization lock, and the second task instruction comprising a second data processing task;
identifying, by the direct memory access unit, an operation status value of the first distributed synchronization lock from the first task instruction based on the first synchronization lock identifier;
executing, by the direct memory access unit when the operation status value of the first distributed synchronization lock is a preset value representing an idle state, and a task type value of the first distributed synchronization lock satisfies an execution condition of the first data processing task, the first data processing task, and transmitting a task completion instruction to the hardware synchronization lock management unit after the first data processing task is completed;
updating, by the hardware synchronization lock management unit based on the task completion instruction, a task type value of a first hardware synchronization lock indicated by the first synchronization lock identifier in a hardware synchronization lock sequence; and
executing, by the vector processing unit when the task type value of the first hardware synchronization lock is updated, the second data processing task.

2. The method according to claim 1, wherein executing, by the vector processing unit when the task type value of the first hardware synchronization lock is updated, the second data processing task comprises:
determining, by the vector processing unit, in the vector processing unit based on the second task instruction, a second distributed synchronization lock indicated by the first synchronization lock identifier comprised in the second task instruction;
updating, by the vector processing unit when a task type value of the second distributed synchronization lock is updated, an operation status value of the second distributed synchronization lock to the preset value representing the idle state, the task type value of the second distributed synchronization lock being updated to the task type value of the first hardware synchronization lock after a first number of clock cycles since the task type value of the first hardware synchronization lock is updated; and
executing, by the vector processing unit when the operation status value of the second distributed synchronization lock is the preset value representing the idle state, and the task type value of the second distributed synchronization lock satisfies an execution condition of the second data processing task, the second data processing task comprised in the second task instruction.

3. The method according to claim 1 or 2, further comprising:
determining, by the hardware synchronization lock management unit, at least one idle hardware synchronization lock and an identifier of each hardware synchronization lock in the hardware synchronization lock sequence;
transmitting, by the hardware synchronization lock management unit, an identifier of any hardware synchronization lock as the first synchronization lock identifier to the scalar processing unit; and
generating, by the scalar processing unit, the first task instruction and the second task instruction in response to receiving the first synchronization lock identifier.

4. The method according to any one of claims 1 to 3, further comprising:
determining, by a first multiplexer in the direct memory access unit, the first distributed synchronization lock and the operation status value of the first distributed synchronization lock in a first synchronization lock sequence based on the first synchronization lock identifier comprised in the first task instruction, the first synchronization lock sequence being configured for indicating operation status values of a plurality of distributed synchronization locks in the direct memory access unit, the operation status comprising an idle state and a non-idle state, the idle state being configured for indicating that the direct memory access unit is currently capable of executing the first data processing task, and the non-idle state being configured for indicating that the direct memory access unit is currently executing a data processing task corresponding to the first distributed synchronization lock;
determining, by a second multiplexer in the direct memory access unit, the task type value of the first distributed synchronization lock in a second synchronization lock sequence based on the first synchronization lock identifier, the second synchronization lock sequence being configured for indicating task type values of the plurality of distributed synchronization locks in the direct memory access unit; and
determining, by the direct memory access unit, the execution condition of the first data processing task based on a task type of the first data processing task comprised in the first task instruction, the execution condition indicating a condition to be satisfied by the task type value of the first distributed synchronization lock.

5. The method according to any one of claims 1 to 4, wherein the task type of the first data processing task is a read task type, and determining, by the direct memory access unit, the execution condition of the first data processing task based on the task type of the first data processing task comprised in the first task instruction comprises:
using, by the direct memory access unit, the task type value of the first distributed synchronization lock being a first value as the execution condition.

6. The method according to any one of claims 1 to 5, wherein updating, by the hardware synchronization lock management unit based on the task completion instruction, the task type value of the first hardware synchronization lock indicated by the first synchronization lock identifier in the hardware synchronization lock sequence comprises:
determining, by the hardware synchronization lock management unit, the first hardware synchronization lock in the hardware synchronization lock sequence based on the first synchronization lock identifier in the task completion instruction; and
updating, by the hardware synchronization lock management unit, the task type value of the first hardware synchronization lock after a second number of clock cycles.

7. The method according to any one of claims 1 to 6, wherein the task type of the first data processing task is a read task type, and updating, by the hardware synchronization lock management unit, the task type value of the first hardware synchronization lock after the second number of clock cycles comprises:
updating, by the hardware synchronization lock management unit, the task type value of the first hardware synchronization lock from the first value to a second value after the second number of clock cycles.

8. The method according to any one of claims 1 to 7, further comprising:
transmitting, by the scalar processing unit, a third task instruction to the vector processing unit, and transmitting a fourth task instruction to the direct memory access unit, the third task instruction comprising a third data processing task and a third distributed synchronization lock indicated by a second synchronization lock identifier, and the fourth task instruction comprising a fourth data processing task;
executing, by the vector processing unit when an operation status value of the third distributed synchronization lock is the preset value representing the idle state, and a task type value of the third distributed synchronization lock satisfies an execution condition of the third data processing task, the third data processing task, and transmitting a task completion instruction to the hardware synchronization lock management unit after the third data processing task is completed;
updating, by the hardware synchronization lock management unit based on the task completion instruction, a task type value of a second hardware synchronization lock indicated by the second synchronization lock identifier in the hardware synchronization lock sequence; and
executing, by the direct memory access unit, the fourth data processing task when the task type value of the second hardware synchronization lock is updated.

9. The method according to any one of claims 1 to 8, wherein a task type of the third data processing task is the read task type, and the method further comprises:
using, by the vector processing unit, a task type value of the third distributed synchronization lock being the first value as the execution condition of the third data processing task.

10. The method according to any one of claims 1 to 8, wherein the task type of the third data processing task is the read task type, and the updating, by the hardware synchronization lock management unit based on the task completion instruction, a task type value of a second hardware synchronization lock indicated by the second synchronization lock identifier in the hardware synchronization lock sequence comprises:
determining, by the hardware synchronization lock management unit, the second hardware synchronization lock in the hardware synchronization lock sequence based on the second synchronization lock identifier in the task completion instruction; and
updating, by the hardware synchronization lock management unit, the task type value of the second hardware synchronization lock from the first value to the second value after a third number of clock cycles.

11. A data processing system, comprising a direct memory access unit, a vector processing unit, a scalar processing unit, and a hardware synchronization lock management unit, wherein:
the scalar processing unit is configured to transmit a first task instruction to the direct memory access unit, and transmit a second task instruction to the vector processing unit, the first task instruction comprising a first data processing task and a first synchronization lock identifier indicating a first distributed synchronization lock, and the second task instruction comprising a second data processing task;
the direct memory access unit is configured to identify an operation status value of the first distributed synchronization lock from the first task instruction based on the first synchronization lock identifier;
the direct memory access unit is further configured to: execute the first data processing task when the operation status value of the first distributed synchronization lock is a preset value representing an idle state, and a task type value of the first distributed synchronization lock satisfies an execution condition of the first data processing task, and transmit a task completion instruction to the hardware synchronization lock management unit after the first data processing task is completed;
the hardware synchronization lock management unit is configured to update, based on the task completion instruction, a task type value of a first hardware synchronization lock indicated by the first synchronization lock identifier in a hardware synchronization lock sequence; and
the vector processing unit is configured to execute the second data processing task when the task type value of the first hardware synchronization lock is updated.

12. The system according to claim 11, wherein the vector processing unit is configured to: determine, in the vector processing unit based on the second task instruction, a second distributed synchronization lock indicated by the first synchronization lock identifier comprised in the second task instruction; update, when a task type value of the second distributed synchronization lock is updated, an operation status value of the second distributed synchronization lock to the preset value representing the idle state, the task type value of the second distributed synchronization lock being updated to the task type value of the first hardware synchronization lock after a first number of clock cycles since the task type value of the first hardware synchronization lock is updated; and execute, when the operation status value of the second distributed synchronization lock is the preset value representing the idle state, and the task type value of the second distributed synchronization lock satisfies an execution condition of the second data processing task, the second data processing task comprised in the second task instruction.

13. The system according to claim 11 or 12, wherein the hardware synchronization lock management unit comprises the hardware synchronization lock sequence;
the hardware synchronization lock management unit is configured to determine at least one idle hardware synchronization lock and an identifier of each hardware synchronization lock in the hardware synchronization lock sequence;
the hardware synchronization lock management unit is further configured to transmit the identifier of any hardware synchronization lock as the first synchronization lock identifier to the scalar processing unit; and
the scalar processing unit is configured to generate the first task instruction and the second task instruction in response to receiving the first synchronization lock identifier.

14. The system according to any one of claims 11 to 13, wherein the direct memory access unit comprises a first multiplexer, a second multiplexer, a first synchronization lock sequence, and a second synchronization lock sequence, wherein
the first multiplexer is configured to determine the first distributed synchronization lock and the operation status value of the first distributed synchronization lock in the first synchronization lock sequence based on the first synchronization lock identifier comprised in the first task instruction, the first synchronization lock sequence being configured for indicating operation status values of a plurality of distributed synchronization locks in the direct memory access unit, the operation status comprising an idle state and a non-idle state, the idle state being configured for indicating that the direct memory access unit is currently capable of executing the first data processing task, and the non-idle state being configured for indicating that the direct memory access unit is currently executing a data processing task corresponding to the first distributed synchronization lock;
the second multiplexer is configured to determine the task type value of the first distributed synchronization lock in the second synchronization lock sequence based on the first synchronization lock identifier, the second synchronization lock sequence being configured for indicating task type values of the plurality of distributed synchronization locks in the direct memory access unit; and
the direct memory access unit is configured to determine the execution condition of the first data processing task based on a task type of the first data processing task comprised in the first task instruction, the execution condition being configured for indicating a condition to be satisfied by the task type value of the first distributed synchronization lock.

15. The system according to any one of claims 11 to 14, wherein the task type of the first data processing task is a read task type; and
the direct memory access unit is configured to use the task type value of the first distributed synchronization lock being a first value as the execution condition.

16. The system according to any one of claims 11 to 15, wherein the hardware synchronization lock management unit comprises the hardware synchronization lock sequence; and
the hardware synchronization lock management unit is configured to: determine the first hardware synchronization lock in the hardware synchronization lock sequence based on the first synchronization lock identifier in the task completion instruction; and update the task type value of the first hardware synchronization lock after a second number of clock cycles.

17. The system according to any one of claims 11 to 16, wherein the task type of the first data processing task is a read task type; and
the hardware synchronization lock management unit is configured to update the task type value of the first hardware synchronization lock from the first value to a second value after the second number of clock cycles.

18. The system according to any one of claims 11 to 17, wherein the vector processing unit comprises a third distributed synchronization lock;
the scalar processing unit is configured to transmit a third task instruction to the vector processing unit, and transmit a fourth task instruction to the direct memory access unit, the third task instruction comprising a third data processing task and a third distributed synchronization lock indicated by a second synchronization lock identifier, and the fourth task instruction comprising a fourth data processing task;
the vector processing unit is configured to: execute the third data processing task when the operation status value of the third distributed synchronization lock is the preset value representing the idle state, and a task type value of the third distributed synchronization lock satisfies an execution condition of the third data processing task, and transmit a task completion instruction to the hardware synchronization lock management unit after the third data processing task is completed;
the hardware synchronization lock management unit is configured to update, based on the task completion instruction, a task type value of a second hardware synchronization lock indicated by the second synchronization lock identifier in the hardware synchronization lock sequence; and
the direct memory access unit is configured to: execute the fourth data processing task when the task type value of the second hardware synchronization lock is updated.

19. A chip, comprising the data processing system according to any one of claims 11 to 18.

20. A terminal, comprising a processor and a memory, the memory having stored therein the data processing method according to any one of claims 1 to 10, and the processor being configured to implement the data processing method by using a data processing system.
